# EUROPEAN PATENT APPLICATION

(11) **EP 4 641 178 A1**
(43) Date of publication of application: **29.10.2025**
(21) Application number: 24778633.8
(22) Date of filing: 29.01.2024
(51) Int. Cl.: G01N 21/88, G01N 21/89, G01N 21/90

(54) **INSPECTION SYSTEM, INSPECTION METHOD, AND INSPECTION PROGRAM**

(30) Priority: 31.03.2023 JP 2023058926
(71) Applicant: Suntory Holdings Limited, Osaka-shi, Osaka 530-8203 (JP)
(72) Inventor: TANAKA Keisuke, Tokyo 108-8503 (JP); FUJITA Naokazu, Tokyo 108-8503 (JP); SAITO Yoshihiro, Tokyo 108-8503 (JP)
(74) Representative: Vossius & Partner Patentanwälte Rechtsanwälte mbB
(86) International application number: PCT/JP2024/002567
(87) International publication number: WO 2024/202487

(57) **Abstract**

An inspection system includes a detection unit 2 capable of detecting an inspected object, and a calculation device 51. The detection unit 2 includes at least one imaging device 21, 22. The calculation device 51 is capable of implementing a preliminary inspection function of performing a preliminary inspection of the inspected object based on a detection result of the inspected object by the detection unit 2, a criterion determination function of determining a quality criterion of the inspected object based on a result of the preliminary inspection, and a quality determination function of determining a quality of the inspected object based on an image of the inspected object captured by the imaging device 21, 22 and the quality criterion.

## Description

### Technical Field

The present invention relates to an inspection system, an inspection method, and an inspection program.

### Background Art

In an inspection of a packaging material of a beverage product or the like, a technique of inspecting the quality of an inspected object based on an image capturing the inspected object is widely used. WO 2020/121239 (Patent Document 1) discloses an optical inspection device that detects internal defects of a parison based on an image of the parison acquired by using a light source including a polarizing filter and a detector. JP 2018-136268 (Patent Document 2) discloses an inspection device that detects a defect caused by foreign matter having transparency on a side wall of a preform by using a light source that irradiates a side surface of the preform with light from a parallel direction and a camera that acquires a captured image capturing the preform from the side. JP 2017-190952 (Patent Document 3) discloses an inspection method for determining whether or not there is a defect in the thickness of a bottom portion of a preform by irradiating the preform from one side in an axial direction with emitted light of a parallel light flux in the axial direction and acquiring an image of a irradiated preform captured from the other side in the axial direction.

### Citation List

### Patent Document

Patent Document 1: WO 2020/121239 (or JP 2022-512434 T)
Patent Document 2: JP 2018-136268 A
Patent Document 3: JP 2017-190952 A

### Summary of Invention

### Technical Problem

However, the techniques of Patent Documents 1 to 3 are premised on detecting, as defective products, those that exceptionally do not satisfy a predetermined quality standard, on the premise that the majority of inspected objects meet the quality standard. Therefore, in a case in which the quality standard itself to be satisfied by the inspected object differs depending on factors such as the product or the manufacturing lot of the inspected object, a part of non-defective products may be determined to be defective products. To avoid this, a condition for detecting the inspected object as a defective product needs to be adjusted each time an inspected object having a different quality standard is used, making the procedure at the time of product changeover complicated.

Therefore, there is demand for realization of an inspection system, an inspection method, and an inspection program capable of automatically adjusting a quality criterion for an inspected object.

### Solution to Problem

An inspection system according to the present invention includes a detection unit capable of detecting an inspected object, and a calculation device. The detection unit includes at least one imaging device. The calculation device is capable of implementing a preliminary inspection function of performing a preliminary inspection of the inspected object based on a detection result of the inspected object by the detection unit, a criterion determination function of determining a quality criterion of the inspected object based on a result of the preliminary inspection, and a quality determination function of determining a quality of the inspected object based on an image of the inspected object captured by the at least one imaging device and the quality criterion.

An inspection method according to the present invention includes performing a preliminary inspection of an inspected object, determining a quality criterion of the inspected object based on a result of the preliminary inspection, and determining a quality of the inspected object based on an image of the inspected object and the quality criterion.

An inspection program according to the present invention is an inspection program that, when executed by a computer, causes the computer to implement a preliminary inspection function of performing a preliminary inspection of an inspected object, a criterion determination function of determining a quality criterion of the inspected object based on a result of the preliminary inspection, and a quality determination function of determining a quality of the inspected object based on an image of the inspected object and the quality criterion.

According to these configurations, a quality criterion of an inspected object can be automatically adjusted. This makes it possible to reduce erroneous determination in which a non-defective product is determined to be a defective product, thereby contributing to resource saving. Further, an operation of manually adjusting the quality criterion is not required, making it possible to improve production efficiency.

Preferred embodiments of the present invention will be described below. However, the scope of the present invention is not limited by the preferred embodiments described below.

In the inspection system according to an embodiment of the present invention, preferably, the preliminary inspection function is configured to determine a color of the inspected object based on the detection result of the inspected object by the detection unit.

According to this configuration, erroneous determinations are readily reduced in a case in which variation exists in the color of non-defective inspected objects.

In the inspection system according to an embodiment of the present invention, preferably, the quality criterion is a threshold of binarization processing, and the quality determination function is configured to acquire a binarized image obtained by performing binarization processing on the image of the inspected object captured by the at least one imaging device by using the threshold determined by the criterion determination function, and determine the quality of the inspected object based on an area of a bright part or a dark part in the binarized image.

According to this configuration, the quality of the inspected object can be determined by relatively simple image processing.

The inspection system according an embodiment of the present invention preferably further includes a storage device configured to store a plurality of reference images, the quality criterion is preferably at least one reference image selected from the plurality of reference images by the criterion determination function, and the quality determination function is preferably configured to determine the quality of the inspected object based on a comparison between the image of the inspected object captured by the at least one imaging device and the at least one reference image selected.

According to this configuration, a result of inspection by the inspection system and a result of manual inspection are likely to match. Further, setting the quality criterion is relatively easy.

In the inspection system according to an embodiment of the present invention, preferably, the quality determination function is configured to calculate a score indicating the quality of the inspected object based on the comparison between the image of the inspected object captured by the at least one imaging device and the at least one reference image selected.

According to this configuration, the quality of the inspected object is quantitatively compared easily.

In the inspection system according to an embodiment of the present invention, preferably, the detection unit includes at least a first imaging device and a second imaging device, the detection result used in the preliminary inspection function is an image of the inspected object captured by the first imaging device, and the image used in the quality determination function is an image of the inspected object captured by the second imaging device.

According to this configuration, it is possible to set an imaging condition in the first imaging device from the viewpoint of obtaining an image suitable for determining the color and set an imaging condition in the second imaging device from the viewpoint of obtaining an image suitable for determining the quality, and thus obtain images suitable for each determination, thereby facilitating improvement in inspection accuracy.

Further features and advantages of the present invention will become more apparent from the following description of exemplary and non-limiting embodiments with reference to the drawings.

### Brief Description of Drawings

FIG. 1 is a schematic view of an inspection system according to an embodiment.
FIG. 2 is a configuration view of the inspection system according to the embodiment.
FIG. 3 is a configuration view of a first modification of the inspection system according to the embodiment.
FIG. 4 is a configuration view of a second modification of the inspection system according to the embodiment.

### Description of Embodiments

Embodiments of an inspection system, an inspection method, and an inspection program according to the present invention will be described with reference to the drawings. Hereinafter, an example in which an inspection system according to the present invention is applied to an inspection system 1 that inspects a preform P (example of inspected object) and an inspection method that uses the inspection system 1 will be described.

### Configuration of Inspection System

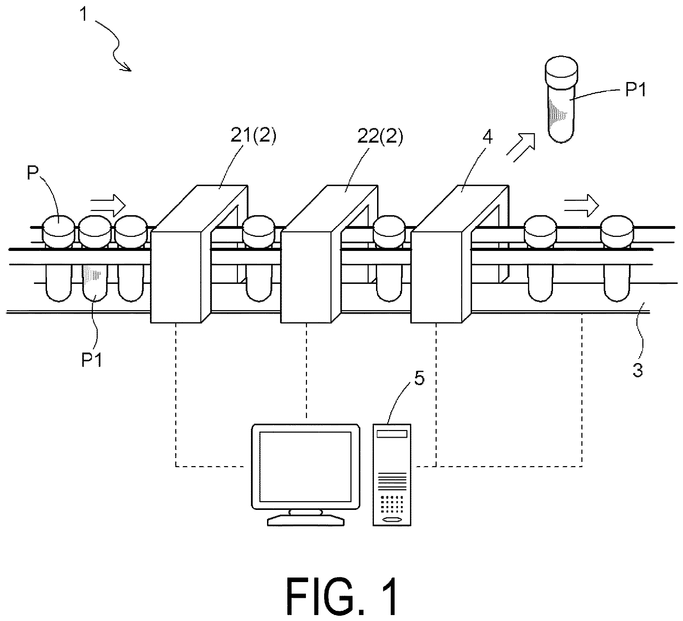

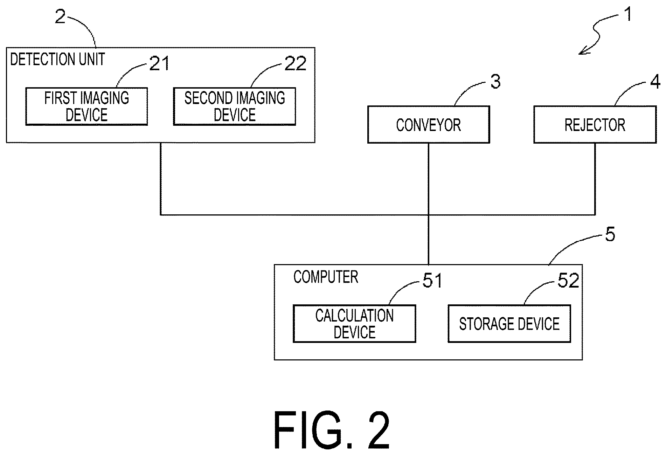

The inspection system 1 includes a detection unit 2, a conveyor 3, a rejector 4, and a computer 5 (FIG. 1, FIG. 2). An inspection program according to the present embodiment is installed in the computer 5.

In the present embodiment, the detection unit 2 includes a first imaging device 21 and a second imaging device 22. Each of the first imaging device 21 and the second imaging device 22 includes a digital camera for capturing the preform P passing through a machine to generate image data, and the generated image data is transferred to the computer 5. Note that the first imaging device 21 and the second imaging device 22 are devices that detect the preform P present in a field of view of each digital camera and generate image data, and thus are devices that can detect the preform P.

Both the first imaging device 21 and the second imaging device 22 are installed in a posture capable of capturing the preform P transported by the conveyor 3, and the first imaging device 21 is installed upstream of the second imaging device 22 in a transport direction of the conveyor 3. The first imaging device 21 and the second imaging device 22 preferably have continuous shooting capabilities to such an extent that facilitate, at each point, the imaging of the preform P transported following a transport speed of the conveyor 3.

The conveyor 3 continuously transports a plurality of the preforms P aligned in a row. The conveyor 3 includes an encoder (not illustrated), and a movement amount of the conveyor 3 is input to the computer 5. As a result, the computer 5 can associate the captured images of the first imaging device 21 and the second imaging device 22 with the individual preforms P.

The rejector 4 is a device capable of selectively rejecting specific individual ones of the preforms P transported by the conveyor 3. The rejector 4 is controlled by the computer 5, and the computer 5 operates the rejector 4 with respect to the preform P to be rejected (preform P1 with foreign matter adhered thereto, for example) by using a signal of the encoder of the conveyor 3 as a key for rejection.

Note that, as the conveyor 3 and the rejector 4 according to the present embodiment, those typically used in a device that inspects preforms can be used.

The computer 5 is a computer well known as hardware. Accordingly, the computer includes typical constituent elements of a computer, such as a calculation device 51 such as a central processing unit (CPU) and a storage device 52 such as a hard disk drive.

### Configuration of Inspection Method and Inspection Program

Next, two embodiments of an inspection method that uses the inspection system 1 will be described. The difference between the two embodiments lies in the inspection program executed by the computer 5; the hardware configurations of the inspection system 1 are the same. When summarized, the difference between the two embodiments is that the quality of the preform P is determined by performing binarization processing on the captured image of the preform P in a first embodiment, and the quality of the preform P is determined by comparing the captured image of the preform P with a reference image in a second embodiment.

### Common Matters

In both embodiments, the inspection method according to the present embodiment includes a preliminary inspection process, a criterion determination process, and a quality determination process. As functions for implementing these processes, the inspection program according to the present embodiment causes the computer 5 (calculation device 51) to implement a preliminary inspection function, a criterion determination function, and a quality determination function.

In both embodiments, the plurality of preforms P are transported in a state of being aligned in a row by the conveyor 3. When the preforms P being transported pass through each of the first imaging device 21 and the second imaging device 22, an image of each preform P is captured, and each image is transferred to the computer 5. Note that, for distinction, an image captured by the first imaging device 21 is referred to as a first image, and an image captured by the second imaging device 22 is referred to as a second image.

The preliminary inspection function is common to the two embodiments, and is a function of performing a preliminary inspection of the preform P based on the image (first image) of the preform P captured by the first imaging device 21. In the preliminary inspection function according to the present embodiment, calculation processing of specifying a portion corresponding to the preform P in the first image and specifying the color of the portion in an L*a*b* color system is performed.

The criterion determination function and the quality determination function are different in the two embodiments, and will be described separately below. Note that, in both embodiments, the functions are implemented in the order of the preliminary inspection function, the criterion determination function, and the quality determination function. The criterion determination function is a function of determining a quality criterion used by the quality determination function, and thus the quality determination function will be described first, then the quality criterion to be used will be clearly defined, and subsequently the criterion determination function of determining the quality criterion will be described.

### First Embodiment

The quality determination function according to the first embodiment acquires a binarized image obtained by performing binarization processing on the image (second image) of the preform P captured by the second imaging device 22, and determines the quality of the preform P based on an area of a dark part in the binarized image. The preform P is a transparent article, and thus appears with relatively high brightness in the second image. On the other hand, in the case of the preform P1 with foreign matter adhered thereto, the foreign matter does not transmit light or irregularly reflects light, and thus the portion with the foreign matter appears with relatively low brightness in the second image. As a result, the area of the dark part is larger in the binarized image of a case in which foreign matter exists as compared with that in the binarized image of a case in which foreign matter does not exist. With this result, the determination is made that there is a possibility of foreign matter adherence to the preform P1 where the area of the dark part exceeds a predetermined reference value, and the preform is set as a rejection target.

The binarization processing performed here is known binarization processing. That is, for all pixels of the second image subjected to the binarization processing, a portion where the brightness is equal to or greater than a threshold is set as a bright part, and a portion where the brightness is lower than the threshold is set as a dark part.

Here, there is a problem in that the result of the quality determination may vary depending on the color of the preform P. For example, the brightness of the preform P in the second image tends to be low when the preform P is colored and transparent as compared to that when the preform P is colorless and transparent. Therefore, when the same threshold is used for the case of being colorless and transparent and the case of being colored and transparent, the area of the dark part tends to be larger in the latter case. As a result, when colored and transparent, the preform P may be regarded as a rejection target despite having no foreign matter adhered thereto. Therefore, in the present embodiment, this problem is solved by adjusting the threshold in consideration of color.

The criterion determination function according to the present embodiment determines the threshold of the binarization processing based on the color (example of result of preliminary inspection) of the inspected preform P determined by the preliminary inspection function. Specific examples of the method include a method of selecting a threshold from predetermined candidates based on a magnitude of at least one of the L* value, the a* value, and the b* value specified by the preliminary inspection function, and a method of determining a threshold as a function of at least one of the L* value, the a* value, and the b* value.

Thus, the binarization processing is performed by using the threshold determined in consideration of the color of the preform P to be inspected, thereby facilitating avoidance of erroneous determination caused by the color of the preform P.

Among the functions described above, the quality determination function is implemented for all preforms P. This is because it is necessary to inspect all preforms P and set the preforms P determined as ones possibly having foreign matter adhering thereto as rejection targets.

In contrast, while implementation of the preliminary inspection function and the criterion determination function for all individual preforms P is not excluded, such implementation is not necessarily required. With the color of the preform P expected to be within a certain range in a certain handling unit, such as model number or delivery unit (lot) of the preform P, the accuracy of the quality determination often does not decrease even if the same threshold of binarization is set for that handling unit. The preliminary inspection function and the criterion determination function can be implemented at a timing such as, for example, each time the model number of the preform P is changed, each time the lot is changed, or at each predetermined quantity of the preforms P (for example, 100 preforms P).

Note that the frequency at which the preliminary inspection function is implemented and the frequency at which the criterion determination function is implemented need not match. For example, the preliminary inspection function may be implemented for all individual preforms P to identify a trend in color change in the preforms P, and the criterion determination function may be implemented when the color of the preforms P deviates from a predetermined range.

### Second Embodiment

The quality determination function according to the second embodiment determines the quality of the preform P based on a comparison between the image (second image) of the preform P captured by the second imaging device 22 and the reference image. The reference image is an image of a non-defective preform P (that is, preform P without foreign matter adhered thereto) captured in advance, and is stored in the storage device 52.

In a case in which foreign matter is not adhered to the preform P to be inspected, the second image and the reference image are expected to exhibit a high degree of correspondence. On the other hand, in the case of the preform P1 with foreign matter adhered thereto, the second image and the reference image are clearly different from each other within a range in which the foreign matter is present. Therefore, pixels of portions corresponding to the preform P in the second image and the reference image are compared with each other, and a sum of differences among all pixels compared is calculated as a score of the preform P. Then, the preform P1 having a score exceeding a predetermined reference value is determined to be a preform possibly having foreign matter adhered thereto, and is set as a rejection target.

In this case as well, there is a problem in that the result of the quality determination may vary depending on the color of the preform P. For example, in a case in which the preform P in the reference image is colorless and transparent and the preform P inspected is colored and transparent, the colors of the two differ, resulting in a slight difference in each pixel when the pixels of the portions corresponding to the preforms P in the second image and the reference image are compared. Therefore, the sum of the differences is likely to be a large value, and the preform P may be regarded as a rejection target despite having no foreign matter adhered thereto. In the present embodiment, this problem is solved by selecting the reference image in consideration of the color.

In the present embodiment, the storage device 52 stores a plurality of reference images. The plurality of reference images are obtained by individually capturing images of a plurality of non-defective preforms P having different colors. Further, each reference image is associated with a numerical value (at least one of L* value, a* value, or b* value, for example) indicating a color of a non-defective product to be captured.

The criterion determination function according to the present embodiment selects a reference image most suitable as the quality criterion to be used for the inspection of the preform P to be inspected from the plurality of reference images stored in the storage device 52 based on the color of the preform P to be inspected (example of result of preliminary inspection) determined by the preliminary inspection function. For example, the reference image associated with a value closest to at least one of the L* value, the a* value, or the b* value specified by the preliminary inspection function is selected.

Thus, the score is calculated by using the reference image determined in consideration of the color of the preform P to be inspected, facilitating avoidance of erroneous determination caused by the color of the preform P.

Note that the second embodiment is the same as the first embodiment in that the preliminary inspection function and the criterion determination function do not necessarily need to be implemented for all preforms P and that the frequencies of the preliminary inspection function and the criterion determination function do not need to match.

### Effects of Inspection System

As described above, the preform P is inspected by using the inspection system 1 according to the present embodiment, making it less likely that, in a case in which the preform P is colored and transparent, the preform P is erroneously determined to be a rejection target due to the color of the preform P itself. Further, a manual operation of adjusting the quality criterion in consideration of the color of the preform P is not necessary, making it possible to realize streamlined, labor-saving inspection.

### Modifications

Next, modifications of the inspection system 1 according to the embodiments described above will be described with reference to the drawings.

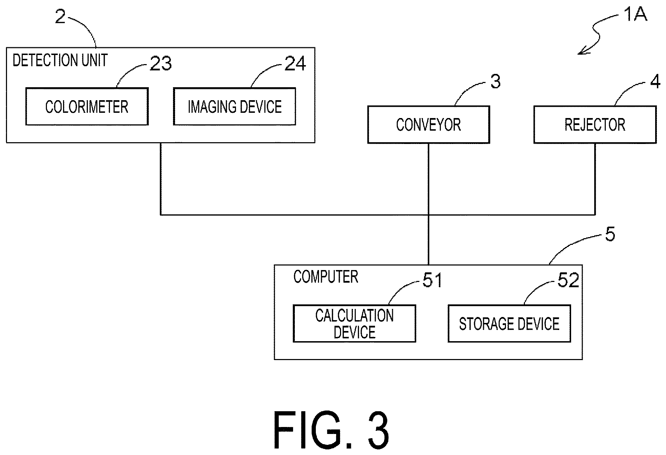

In an inspection system 1A according to a first modification, the detection unit 2 includes a colorimeter 23 and an imaging device 24 (FIG. 3). The colorimeter 23 is a device that measures the color of the preform P and outputs a numerical value (example of detection result) represented by a predetermined color system, and a known colorimeter can be used. An output value of the colorimeter 23 is input to the computer 5. In the present modification, the output value of the colorimeter 23 is used by the preliminary inspection function, and the captured image of the imaging device 24 is used by the quality determination function. Thus, the preliminary inspection function according to the present invention is not limited to a mode in which the color is determined based on the captured image.

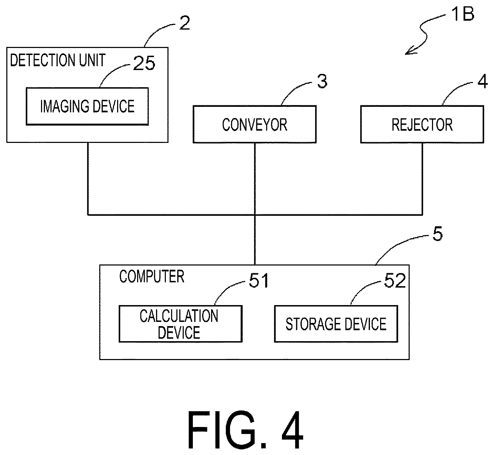

In an inspection system 1B according to a second modification, the detection unit 2 includes a single imaging device 25 (FIG. 4). In the present modification, the image captured by the imaging device 25 is used by both the preliminary inspection function and the quality determination function. According to the present modification, the number of imaging devices can be reduced as compared with those in the embodiments described above, which is advantageous in terms of installation space and installation cost of the inspection system. On the other hand, a mode of an image suitable for determination of the color and a mode of an image suitable for determination of the quality of the image do not always match, resulting in the possibility of a disadvantage in terms of the inspection accuracy.

Each of the modifications is the same as the embodiments described above except for the points noted. Note that each modification can be applied to either of the two embodiments of the criterion determination function and the quality determination function.

As is apparent from the embodiments and the modifications described above, in the present invention, the type and the quantity of devices constituting the detection unit are not limited as long as at least one imaging device is included. In particular, the detection result provided to the preliminary inspection function is not limited to an image and, accordingly, the device for acquiring the detection result is not limited to an imaging device.

### Other Embodiments

Lastly, other embodiment of the inspection system, the inspection method, and the inspection program according to the present invention will be described. Note that the configuration described in each of the following embodiments can also be applied in combination with the configuration described in another embodiment as long as no contradiction arises.

In the embodiments described above, a configuration in which the color of the preform P is determined by the preliminary inspection function has been described as an example. However, the preliminary inspection function according to the present invention is not limited to the mode of determining the color of the inspected object. Examples of other modes include, but are not limited to, a mode of determining a gloss of the inspected object (result of preliminary inspection is gloss), a mode of performing infrared spectroscopic measurement of the inspected object (result of preliminary inspection is infrared spectroscopic spectrum), and a mode of performing near-infrared spectroscopic measurement of the inspected object (result of preliminary inspection is near-infrared spectroscopic spectrum). Note that a device capable of acquiring a detection result corresponding to the mode of the selected preliminary inspection function can be included in the detection unit. For example, when the preliminary inspection function is implemented in the mode of determining the gloss of the inspected object, the detection unit can include a gloss meter.

In the embodiments described above, as the quality determination function, an example in which the binarization processing is performed on an image of the preform P and an example in which the image of the preform P is compared with a reference image have been described. However, in the present invention, the mode of using an image of the inspected object in the quality determination function is not limited. Further, the quality criterion is determined in accordance with the mode selected for the quality determination function, and the mode of the criterion determination function is determined in accordance with the quality criterion.

In the embodiments described above, a configuration in which the color of the preform P is specified by the L* a* b* color system in the preliminary inspection function is described as an example. However, in a case in which the color is specified in the preliminary inspection function according to the present invention, the color system to be used is as desired, and a known color system such as the XYZ color system, the Munsell color system, the RGB color system, the L*C*h color space, or the Practical Color Coordinate System (PCCS; developed by the Japan Color Research Institute) can be used. Note that specifications of the device for obtaining the detection result used by the preliminary inspection function can be determined in accordance with the selected color system.

In the embodiments described above, a configuration in which the detection unit 2 and the computer 5 (calculation device 51) are separate has been described as an example. However, in the present invention, the detection unit and the calculation device may be incorporated in the same constituent element. For example, the present invention can also be implemented in a case in which a device (typically, smartphone or the like) in which an imaging device and a calculation device are integrally incorporated is used.

Also, with respect to other configurations, it should be understood that the embodiments described in the present specification are illustrative in all respects and that the scope of the present invention is not limited thereto. It will be easily understood by those skilled in the art that appropriate modifications can be made without departing from the spirit of the present invention. Accordingly, other embodiments modified without departing from the spirit of the present invention are naturally included in the scope of the present invention.

### Industrial Applicability

The present invention can be utilized in the inspection of a preform or a bottle, for example.

### Reference Signs List

1: Inspection system
2: Detection unit
21: First imaging device
22: Second imaging device
3: Conveyor
4: Rejector
5: Computer
51: Calculation device
52: Storage device
P: Preform
P1: Preform with foreign matter adhered thereto
1A: Inspection system (first modification)
23: Colorimeter
24: Imaging device
1B: Inspection system (second modification)
25: Imaging device

## Claims

1. An inspection system comprising:
a detection unit capable of detecting an inspected object; and
a calculation device, wherein
the detection unit includes at least one imaging device, and
the calculation device is capable of implementing
a preliminary inspection function of performing a preliminary inspection of the inspected object based on a detection result of the inspected object by the detection unit,
a criterion determination function of determining a quality criterion of the inspected object based on a result of the preliminary inspection, and
a quality determination function of determining a quality of the inspected object based on an image of the inspected object captured by the at least one imaging device and the quality criterion.

2. The inspection system according to claim 1, wherein
the preliminary inspection function is configured to determine a color of the inspected object based on the detection result of the inspected object by the detection unit.

3. The inspection system according to claim 1 or 2, wherein
the quality criterion is a threshold of binarization processing, and
the quality determination function is configured to
acquire a binarized image obtained by performing binarization processing on the image of the inspected object captured by the at least one imaging device by using the threshold determined by the criterion determination function, and
determine the quality of the inspected object based on an area of a bright part or a dark part in the binarized image.

4. The inspection system according to claim 1 or 2, further comprising:
a storage device configured to store a plurality of reference images, wherein
the quality criterion is at least one reference image selected from the plurality of reference images by the criterion determination function, and
the quality determination function is configured to determine the quality of the inspected object based on a comparison between the image of the inspected object captured by the at least one imaging device and the at least one reference image selected.

5. The inspection system according to claim 4, wherein
the quality determination function is configured to calculate a score indicating the quality of the inspected object based on the comparison between the image of the inspected object captured by the at least one imaging device and the at least one reference image selected.

6. The inspection system according to claim 1 or 2, wherein
the detection unit includes at least a first imaging device and a second imaging device,
the detection result used in the preliminary inspection function is an image of the inspected object captured by the first imaging device, and
the image used in the quality determination function is an image of the inspected object captured by the second imaging device.

7. An inspection method comprising:
performing a preliminary inspection of an inspected object;
determining a quality criterion of the inspected object based on a result of the preliminary inspection; and
determining a quality of the inspected object based on an image of the inspected object and the quality criterion.

8. An inspection program that, when executed by a computer, causes the computer to implement:
a preliminary inspection function of performing a preliminary inspection of an inspected object;
a criterion determination function of determining a quality criterion of the inspected object based on a result of the preliminary inspection; and
a quality determination function of determining a quality of the inspected object based on an image of the inspected object and the quality criterion.
